# EUROPEAN PATENT APPLICATION

(11) **EP 2 752 463 A1**
(43) Date of publication of application: **09.07.2014**
(21) Application number: 12827034.5
(22) Date of filing: 22.08.2012
(51) Int. Cl.: C08L 101/02, C08K 3/04, C08K 5/40, H01M 8/02, H01M 8/10

(54) **HEAT-CURABLE RESIN COMPOSITION, METHOD FOR PRODUCING CURED ARTICLE AND MOLDED ARTICLE THEREOF, CURED ARTICLE, MOLDED ARTICLE, AND SEPARATOR FOR FUEL CELL**

(30) Priority: 31.08.2011 JP 2011189743
(71) Applicant: Showa Denko K.K., Tokyo 105-8518 (JP)
(72) Inventor: AKINAGA, Yoji, Tokyo 105-8518 (JP); NOGUCHI, Masayuki, Tokyo 105-8518 (JP); IZUMI, Zenichiro, Tokyo 105-8518 (JP)
(74) Representative: Hoefer & Partner
(86) International application number: PCT/JP2012/005263
(87) International publication number: WO 2013/031145

(57) **Abstract**

Provided are a heat-curable resin composition that yields a molded article having excellent dimensional accuracy and mechanical property even when high-temperature molding is carried out, a production method of article and a molded article thereof, a cured article, a molded article, and a separator for a fuel cell. A heat-curable resin composition in an embodiment of the present invention comprises: (A) a binder in an amount of 100 parts by mass comprising 50 mass% or more of a polymer comprising 60 mol% or more monomer units having a carbon-carbon double bond in a side chain; (B) a carbon material in an amount of 150 to 1, 000 parts by mass; (C) a curing initiator in an amount of 1 to 10 parts by mass; and(D) a curing retarder in an amount of 0.1 to 2 parts by mass.

## Description

### Technical Field

The present invention relates to a heat-curable resin composition suitably available for conductive electronic parts such as a separator for a fuel cell and a cured article, a molded article obtained from the heat-curable resin composition, and a production method of a cured article and a molded article, and a separator for a fuel cell.

### Background Art

Conventionally, for the materials used for an application demanding high conductivity, the materials such as metal or carbon materials have been used. In these materials, the carbon materials are superior in conductivity, not corroded like metals, and superior in heat resistance, lubricity, heat conductance, durability, and so on. It is one reason why carbon materials have been developed as conductive materials in each field demanding electric conductivity that the degree of freedom for the molding property has been improved by composition with the polymer material in particular.

One of the applications of the conductor which is made by molding the polymer composited with the carbon materials includes a separator for e fuel cell. The fuel cells are classified into several kinds depending on the kind of the electrolyte. Above all, the polymer electrolyte fuel cell is of great promise to be used for cars or consumer products since it operates at low temperature of around 80 °C to 90 °C. For example, the polymer electrolyte fuel cell supplies oxygen to an anode of the power generation part consists of a catalyst, a polymer solid electrolyte and a gas diffusion electrode, supplies hydrogen to a cathode thereof, and generates electricity by reacting them. Since it is necessary to laminate a lot of generation parts to get a high voltage from such a fuel cell, a separator for a fuel cell is used to partition off between the laminated generation parts.

Because of this, the high conductivity to make available the electricity generated in the power generation part without a loss, high dimensional accuracy to prevent gas leakage, and heat resistance to hold the dimensional accuracy at the vicinity of operating temperature, are needed for the separator for a fuel cell. Furthermore, since the polymer electrolyte fuel cell is operated under a wet condition, hot water resistance is also demanded. Even more particularly, for the polymer electrolyte fuel cell for an application where vibration is applied in operation, such as an automobile, a good dynamic mechanical property is also demanded.

For polymer materials which are composited with the carbon materials in a separator for a fuel cell, either a thermoplastic resin or a thermosetting resin may be used. The separator for a fuel cell using the thermosetting resin is superior in heat-resistance and hot water resistance in comparison with that using the thermoplastic resin. For thermosetting materials used for the separator, phenolic resin (for example, see patent document 1), 1,2-polybutadiene (for example, see patent document 2) and so on are known.

### Prior art documents

### Patent documents

Patent document 1: JP H06-96777 A
Patent document 2: JP 2004-250661 A

### Summary of the invention

### Problem to be solved

While the separator for a fuel cell using the thermosetting resin has the above feature, there is a problem that a molding cycle is longer and a mass production is more difficult than that using the thermoplastic resin. In this regard, in a case of using a radical polymerization material such as 1,2-polybutadiene, it can be molded in a shorter cycle than those of other thermosetting materials. However, further shortening is demanded for the molding cycle. In contrast, there is a problem that the desired dimensional accuracy is not obtainable when the molding temperature is raised to shorten the molding cycle, and the mechanical property turns worse when an additive is added to improve the high-temperature formability.

Thus, the present invention has been made in view of the above problems. An object of the present invention is to provide a heat-curable resin composition providing a molded article superior in dimensional accuracy and mechanical property even when high-temperature molding is carried out, a production method of a cured article and a molded article, a cured article, a molded article, and a separator for a fuel cell.

### Solution to the problem

The present inventors have repeated examinations earnestly to solve the above-described problem. As a result, it has been found that the superior influence is provided in dimensional accuracy and mechanical property depending on the content of a curing retarder included in a heat-curable resin composition.

The present invention is based on the above knowledge by the present inventors, and there is provided a heat-curable resin composition according to an aspect of the present invention to solve the problem, comprising the following (A) to (D).
(A) a binder in an amount of 100 parts by mass comprising 50 mass% or more of a polymer comprising 60 mol% or more monomer units having a carbon-carbon double bond in a side chain,
(B) a carbon material in an amount of 150 to 1,000 parts by mass,
(C) a curing initiator in an amount of 1 to 10 parts by mass, and
(D) a curing retarder in an amount of 0.1 to 2 parts by mass.

Furthermore, in the heat-curable resin composition according to another aspect of the present invention, the (D) curing retarder may be tetrakiss (2-ethylhexyl) thiuram disulfide.

Furthermore, in the heat-curable resin composition according to another aspect of the present invention, the polymer compound included in (A) the binder may be a hydrocarbon.

Furthermore, the heat-curable resin composition according to ○ another aspect of the present invention may further include 5 to 90 mass% of thermoplastic elastomer in (A) the binder.

Furthermore, a cured article according to another aspect of the present invention is provided by heating the heat-curable resin composition.

Furthermore, a molded article according to another aspect of the present invention is provided by molding the heat-curable resin composition in a die with heating.

Furthermore, a production method of a cured article according to another aspect of the present invention is curing the heat-curable resin composition at 200 °C to 300 °C for 90 seconds or less.

Furthermore, separator for a fuel cell according to another aspect of the present invention is provided by molding the heat-curable resin composition using a die with heating.

### Advantageous effects of the invention

The cured article provided by curing a heat-curable resin composition according to an aspect of the present invention is superior in the mechanical property, even when rapid high-temperature molding is carried out. The heat-curable resin composition according to an aspect of the present invention provides a molded article superior in the mechanical property, even when rapid high-temperature molding is carried out. The cured article according to an aspect of the present invention can be used for electronic parts needed for the electric conductivity, and can be preferably used in particular electronic parts needed for high dimensional accuracy and superior mechanical property such as a separator for a fuel cell.

### Brief Description of Drawings

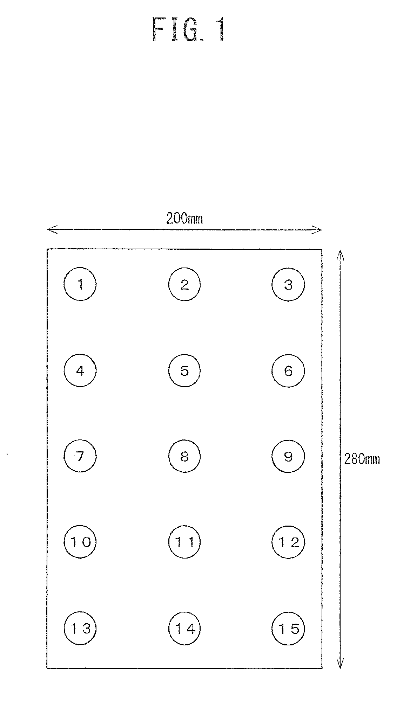

FIG. 1 is a plan view illustrative of a die used for producing a molded article according to an embodiment of the present invention.

### Description of Embodiments

The heat-curable resin composition according to an embodiment of the present invention and a cured article, a molded article, a production method of the cured article and a separator for a fuel cell are described referring the drawings as follows. Note that, in the following description, "part" and "%" expressing the quantity ratio means "part by mass" and "mass %" respectively, unless it is specified in particular.

### (Heat-curable resin composition)

The heat-curable resin composition of the present embodiment comprises, at least, (A) a binder in an amount of 100 parts by mass, (B) carbon materials in an amount of 150 to 1,000 parts by mass, (C) a curing initiator in an amount of 1 to 10 parts by mass, and (D) a curing retarder in an amount of 0.1 to 2 parts by mass.

### (Binder)

### (Polymer compound comprising 60 mol% or more of the monomer units having a carbon-carbon double bond in a side chain)

The above (A) component of the binder comprises 50 mass % or more of polymer compound (hereinafter, referred to as a side chain type C=C bond containing polymer) which comprises 60 mol % or more of the monomer units having the carbon-carbon double bond in a side chain.

The side chain type C=C bond containing polymer preferably includes 70 mol % or more of the monomer units having the carbon-carbon double bond with regard to the number of all monomer units constituting the polymer, and more preferably includes 85 mol% or more. The monomer unit herein refers to a part corresponding to each of the monomers to be a raw material in a polymer. Furthermore, the number of all monomer units is, for example, in the case of a polybutadiene, the grand total counted as 1,2-bond, 1,4-cis bond, and 1,4-trans bond for one monomer unit. If another monomer is copolymerized, every one of the monomers is counted as one monomer unit. The polymer compound including the monomer units having the carbon-carbon double bond in the side chain at the above-described ratio has a good curing property, when cured by reacting the carbon-carbon double bonds.

The side chain type C=C bond containing polymer in the binders of the (A) component may include an oxygen atom, a nitrogen atom, but in order to avoid the hydrolysis due to hot water, preferably includes carbon and hydrogen as basic constitution elements, where the content of the structures containing an ester bond, a urethane bond or an amide bond is preferably 5% or less with regard to the total number of the monomer units, and they are more preferably hydrocarbons.

The side chain type C=C bond containing polymer compound is a polymer having the carbon-carbon double bond in the side chain. The polymer may be homopolymer or copolymer. Furthermore, even if, it is a homopolymer, that is a polymer having one kind of monomor, it may have different microstructures depending on the polymerization method (conditions such as a catalyst, temperature, etc.). For example, in case of a single homopolymer of butadiene, it may have three kinds of 1, 4-cis bond, 1,4-trans bond and 1,2-bond, as the monomer units. Therefore, depending on the ratio that these monomer units are included, the property of the polymer is different.

The examples of monomer units having the carbon-carbon double bond in the side chain include monomers expressed by the equation described below (1) to (3), and the monomer unit expressed by equation (1) or (2) is preferable from the viewpoint of the hot water resistance and formability.

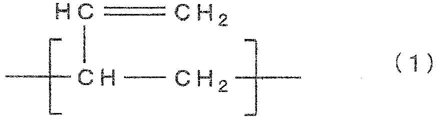

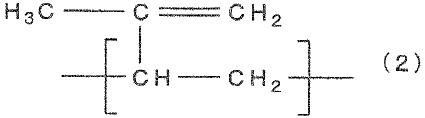

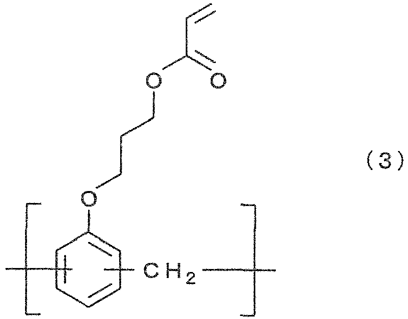

Furthermore, the examples of the above polymer compound include the polymer including 60 mol% or more of the monomer units of 1,2- bond, the novolac-series vinylester resin and so on among polymers obtained by polymerizing raw material monomer including 60 mol% or more of diene compounds, such as butadiene, pentadiene, isoprene, etc. (hereinafter, referred to as diene polymer). In consideration of the hot water resistance and formability, a diene polymer is preferable.

### (Diene polymer)

The diene polymer may be a copolymer of plural diene compound monomers. Furthermore, the part of the carbon-carbon double bond of the side chain may be saturated to be the carbon-carbon bond by hydrogenation.

Examples of the diene polymer include, but not limited to, 1,2- polybutadiene, 3,4-polypentadiene, 3,4-polyisoprene, polycyclopentadiene. Furthermore, the above diene polymer is preferably 1,2-polybutadiene or 3,4-polyisoprene, and more preferably is 1,2-polybutadiene. These polymers may include the monomer unit corresponding to 1,4-bond of the polybutadiene as a microstructure. Even more particularly, a monomer except the diene compound may be copolymerized. The monomer other than the diene compound is styrene, norbornadiene, maleic anhydride, or methacrylic acid. The number of monomer units of 1,4-bond and the monomer units of the other monomers, are preferably less than 40 mol% of the number of all monomer units, more preferably less than 30 mol%, and further preferably less than 15 mol%.

It is a feature that the above diene polymer has a high resistance to hydrolyzability. Therefore, the hot water resistance is superior.

The synthetic method of such a diene polymer is not limited, in particular. The specific examples of the synthetic method are described in "Experimental example 2.20 synthesis of 1,2-polybutadiene and cis-1,4-polybutadienes using cobalt catalyst" on page 41 of "The fourth edition of experiment chemistry lecture, polymer synthesis" (The fourth edition edited by the Chemical Society of Japan, published by Maruzen Co., Ltd. on May 6, 1992) and "Experimental example 2.26 synthesis of 3,4-polyisoprenes using (Pr-O)4Ti-organic aluminum system catalyst" on page 48 of "The fourth edition of experiment chemistry lecture, macromolecule composition" (The fourth edition edited by The Chemical Society of Japan, published by Maruzen Co., Ltd. on May 6, 1992).

Furthermore, for the confirmation of the microstructure of the synthetic diene polymer, any kind of method, but not limiting thereto, may be used. For example, a nuclear magnetic resonance method (hereinafter, referred to as "NMR method") or Fourier transform infrared spectroscopy method (hereinafter, referred to as "FT-IR method") etc. can be performed. These specific examples are described in the section of "Experimental example 223, the measurement of the microstructure of polybutadiene by infrared spectrum" on 45 page of "The experimental methods of the polymer synthesis (The eighth edition published by Kagakudoj in on March 1, 1984)", the Section of "Experimental example 225, the measurement of the microstructure of polybutadiene by NMR" on page 49 of "The experimental method of the polymer synthesis (The eighth edition published by Kagakudojin on March 1, 1984)", and the Section of "Experimental example 226, the measurement of the microstructure of polyisoprene by NMR" on page 51 of "The experimental method of the polymer synthesis (the eighth edition published by Kagakudojin on March 1, 1984)". In the present embodiment, the microstructure is measured by the above NMR method.

For diene polymer including 60 mol% or more of monomer units having the carbon-carbon double bond in the side chain, commercially available products, for example, the brand name of "NISSO-PB" from Nippon Soda Corporation and the brand name of "JSR RB" from JSR Corporation brand can be used.

The branch structure and end structure of the diene polymer is not limited in particular, and the structure including various kinds of denaturation can be used. The specific examples of such a structure include, but not limited to, various kinds of structures such as acrylic denaturation, methacryl denaturation, carboxy denaturation, anhydrous mallein denaturation, and epoxy denaturation.

### (Thermoplastic elastomer)

The binder of the component (A) of the present embodiment may include thermoplastic elastomer. When the binder of the component (A) includes 5 mass% to 40 mass %, preferably 20 mass % to 30 mass % of thermoplastic elastomer, the mechanical property and formability are improved.

As far as this elastomer is a polymer compound exhibiting the elasticity at a room temperature (around 25 °C), a suitable elastomer can be chosen in consideration of the mechanical strength, conductivity, durability, heat resistance, hot-water resistance, machined face, compatibility with the hydrocarbon compound having multiple carbon-carbon double bonds, dispersibility into the composition, and high filling property of the conductive filler. It is preferable that the amount of elastomer having a binding site which can be hydrolyzed, such as the ester bond or urethane bond, is small to avoid hydrolysis by hot water in consideration of the hot-water resistance. However, an appropriate amount is possible to balance with other properties.

Specifically, preferable examples include one or a combination of two or more selected from the group constituted of hydrogenation acrylonitrile butadiene rubber, linear low-density polyethylene, ethylene propylene rubber, fluorine rubber, isoprene rubber, silicone rubber, acrylic rubber, norbornene rubber, butyl rubber, styrene butadiene copolymer and hydrogenation styrene butadiene copolymer. Linear low-density polyethylene is more preferable, but is not limited thereto. Linear low density polyethylene may include ethylene butene copolymer and ethylene octene copolymer.

### (Carbon materials)

The component (B) "carbon materials" (hereinafter, referred to as carbon material) includes one or a combination of two or more selected from the group of natural graphite, artificial graphite, expanded graphite, carbon black, carbon fiber, vapor phase method carbon fiber, carbon nanotube. Above all, artificial graphite is preferable in the present embodiment.

As for the above carbon material, both of formability of the resin composition and the conductivity of the cured article are good, when the content of the carbon material is 150 parts by mass to 1,000 parts by mass, preferably 400 parts by mass to 800 parts by mass, with regard to 100 parts by mass of the binder of the (A) component.

It is preferable that the powder electrical ratio resistivity in the direction perpendicular to the pressure direction should be as low as possible, when the carbon material is compressed so that the bulk density becomes 1g/cm³. The powder electrical resistivity value of such a carbon material is preferably 0.1 Ωcm or less, and more preferably 0.07 Ωcm or less. When the powder electrical resistivity value exceeds 0.1 Ωcm, the conductivity of the cured article becomes low, which tends to make it difficult to obtain a desired cured article.

### (Artificial graphite)

At first, coke is usually produced to obtain the artificial graphite. As for the raw materials of the coke, a petroleum pitch, a coal-based pitch, and so on are used. These raw materials are carbonized to be coke. The method of making graphitization powders from coke generally includes a method of graphitization treatment after crushing coke, a method of crushing graphite after graphitization of coke itself, or a method of crushing a fired product (coke and this fired product together are referred to as coke and the like) which is obtained by adding binder to coke, molding and firing, and so on.

Average particle size and grain distribution can be controlled by the selection of the crush condition of crushing coke, artificial graphite, natural graphite, etc., and the classification of powders if necessary.

### (Expansion graphite powder)

For example, the expansion graphite powders are obtained by the expansion treatment of the graphite crystal in C-axis direction after dipping the graphite in which the crystal structure is highly developed, such as natural graphite, thermolysis graphite, etc. in a strong oxidizing solution such as a mixed solution of strong sulfuric acid and strong nitric acid, a mixed solution of strong sulfuric acid and a solution of strong sulfuric acid and hydrogen peroxide water, so as to form a graphite intercalation compound, and then washing the compound with water, and heating the compound rapidly, or the expansion graphite powders are obtained by crushing a sheet-shaped product made by rolling once.

### (Carbon fiber)

The carbon fiber includes a pitch system made from heavy crude oil, byproduct oil, coal tar, etc., and a PAN system made from polyacrylonitrile.

For example, a vapor phase method carbon fiber is provided by conducting a thermal decomposition reaction of raw materials of organic compounds such as benzene, toluene, natural gas at 800 °C to 1,300 °C with hydrogen gas in the presence of a transition metal catalyst such as the ferrocene. Furthermore, it is preferable to proceed the graphitization treatment at about 2,500 °C to 3,200 °C afterwards.

As for the above carbon fiber, it is preferable to use a vapor phase method carbon fiber having 0.05 µm to 10 µm of a fiber diameter and 1 µm to 500 µm of a fiber length. It is more preferable to use a vapor phase method carbon fiber having 0.1 µm to 5 µm of the fiber diameter and 5 µm to 50 µm of the fiber length. It is further preferable to use a vapor phase method carbon fiber having 0.1 µm to 0. 5 µm of the fiber diameter and 10 µm to 20 µm of the fiber length.

### (Carbon nanotube)

The carbon nanotube is also called graphite whisker, filamentous carbon, graphite fiber, extra-fine carbon tube, carbon tube, carbon fibril, carbon micro tube, carbon nano fiber and so on. The carbon nanotube includes a single-layered carbon nanotube where a graphite film forming a tube is a single layer and a multilayered carbon nanotube where it has multiple layers. In this embodiment, both of single-layered and multilayered carbon nanotube can be used, but it is preferable to use the single-layered carbon nanotube because the cured article with a higher conductivity and mechanical strength tends to be obtainable.

For example, the carbon nanotube can be obtained by an arc discharge method, a laser evaporation method and thermal cracking as described in Saito and Bando "Fundamental carbon nanotube" (P23 - P57, published by Corona Publishing Co.,Ltd. in 1998), and then by refining by the water fever method, the centrifugal separation method, the ultrafiltration method and the oxidation method to further increase its purity. Furthermore, it is more preferable to heat the above carbon nanotube under an inert gas atmosphere at high temperature of around 2,500 °C to 3,200 °C to remove impurities.

It is preferable to use the above carbon nanotube having 0.5 nm to 100 nm of the fiber diameter and 0.01 µm to 10 µm of the fiber length. It is more preferable to use the carbon nanotube having 1 nm to 10 nm of the fiber diameter and 0.05 µm to 5 µm of the fiber length. It is further preferable to use the carbon nanotube having 1 nm to 5 nm of the fiber diameter and 0.1 µm to 3 µm of the fiber length.

Each fiber diameter and fiber length of the vapor phase method carbon fiber and the above carbon nanotube indicates average values of diameter and length of each fiber of the several hundred fibers photographed by a scanning electron microscope (SEM).

### (Carbon black)

The above carbon black includes: ketjen black and acetylene black provided by incomplete combustion of a natural gas, etc., or the thermal decomposition of acetylene; a furnace carbon provided by the incomplete combustion of hydrocarbon oil or the natural gas; and a thermal carbon provided by the thermal decomposition of the natural gas.

### (Boron)

When the above carbon material, particularly, the artificial graphite or the carbon fiber graphitized includes 0.05 mass% to 10 mass% of boron in the carbon material with regard to the total mass of the carbon material, it is preferable because the graphite material having a high graphitization degree and small lattice intervals is provided. This can improve the conductivity of the carbon material. The measurement method of the quantity of boron included in the carbon material is not limited in particular, and even any kind of measurement method can be used. In the present embodiment, values measured by an induction type plasma emission spectrum analysis (hereinafter, referred to as "ICP"), or an induction type plasma emission spectrum mass spectroscopy (hereinafter, referred to as "ICP-MS") are used. Specifically, sulfuric acid and nitric acid are added to a sample, microwave heating (230 °C) is applied to decompose (digester method), in addition, perchloric acid (HClO₄) is added to decompose, the decomposed product is diluted by water, and the quantity of boron is measured by the ICP light emission analyzer device. As for the method to contain boron, the method described in the JP 2005-181690 A, etc. can be used. Furthermore, as far as boron and/or a boron compound are mixed in the carbon material, the form of the boron content is not limited in particular. However, it is also preferable when the boron atoms exist between the layers of the graphite crystal, or when a part of carbon atoms forming a graphite crystal are replaced with boron atoms. Furthermore, the bonding mode between the boron atom, in which the carbon atom is partially replaced with the boron atom, and the carbon atom may be any kind of bonding mode such as covalent bond, ion bond and so on.

### (Curing initiator)

As for the curing initiator, a compound producing a radical by heat such as organic peroxide or azo compound, etc. is preferable, and organic peroxide is more preferable. As for the organic peroxide, well known compounds such as dialkyl peroxide, acyl peroxide, hydro peroxide, peroxy ketals, peroxyl ester and so on can be used. The specific examples include, as the dialkyl peroxide, t-butyl cumyl peroxide, di-cumyl peroxide, di-t-butyl peroxide, 2,5- dimethyl-2,5-bis(t-butyl peroxyl) hexane, 2,5-dimethyl-2,5 -bis (t-butyl peroxy) hexine-3, etc., include, as the acyl peroxide, benzoyl peroxides, etc., include, as the peroxy ketals, 1,1-bis(t- butyl peroxyl) cyclohexanes, 2,2-bis(4,4-dibutyl peroxyl cyclohexyl) propane, etc., include, as the peroxyl ester, t-butyl peroxyl-2-etylhexanate, 2,5-dimethyl-2,5-bis(t-butyl peroxyl) hexane, 2,5-dimethyl-2,5-bis(benzoyl peroxyl) hexane, t-butyl peroxyl benzoate, etc., and include, as the hydro peroxide, p-methane hydro-peroxide, t-butyl hydro peroxide, cumene hydro-peroxide, etc. It is preferable to select these organic peroxide compounds so that the preservation stability of the thermosetting resin balances with the curing property. For example, when curing at 200 °C to 300 °C, it is more preferable to select di-alkyl peroxide such as t-butyl cumyl peroxide, di-cumyl peroxide, di-t- butyl peroxide, 2,5-dimethyl-2,5-bis(t-butyl peroxyl) hexane, 2,5-dimethyl-2,5-bis(t-butyl peroxyl) hexine-3, etc., and it is further preferable to select di-cumyl peroxide or 2,5-dimethyl-2,5-bis(t-butyl peroxyl) hexane. When using these curing initiators, one kind may be used, or a mixture of two or more kinds may also be used.

When the component (A) binder is assumed to be 100 parts by mass, an amount of an organic peroxide compound selected as a curing initiator in the present embodiment is preferably 1 to 10 parts by mass, and more preferably 3 to 7 parts by mass with regard to 100 parts by mass. When an amount of addition of the organic peroxide as the curing initiator falls within the above range, airtightness, strength and durability of the cured article are superior.

### (Curing retarder)

As far as the curing retarder is a compound trapping the radical caused by the organic peroxide of a curing initiator, it is not limited particularly, and can be selected appropriately depending on the purpose. For example, the di-isopropenyl benzene, α-methyl styrene dimer, and thiuram system additives can be used. The curing retarder includes at least one kind or two kinds selected from these compounds. Examples of the thiuram system additive include tetraethyl thiuram disulfide, tetrabutyl thiuram disulfide, tetrakiss (2-ethylhexyl) thiuram disulfide, and tetramethyl thiuram disulfide. In the present embodiment, it is desirable to adopt tetrakiss (2-ethylhexyl) thiuram disulfide out of these thiuram system compounds because bad smell is little and curing difficulty is small.

Furthermore, when the component (A) binder is assumed to be 100 parts by mass, an additive amount of the curing retarder is preferably 0.5 to 1.5 parts by mass with regard to the 100 parts by mass, and more preferably 1 to 2 parts by mass with regard to the 100 parts by mass in view of the bending elastic modulus of the cured article obtained by curing a heat-curable resin composition.

### (Additive)

In the heat-curable resin composition of the present embodiment, lubricant, thickener, cross-linker, curing accelerant, plasticizer, low shrinkage agent, thixotropy imparting agent, surfactant, solvent, glass fiber, inorganic fiber filler, organic fiber, ultraviolet rays stabilizer, antioxidant, antifoaming agent, leveling agent, parting agent, water repellent agent, hydrophilizing agent, etc. may be added if necessary for the purpose of improving the hardness, strength, conductivity, formability, durability, weatherability, water resistance, and the like.

### (Production method of heat-curable resin composition)

The production method of the heat-curable resin composition of the present embodiment includes the mixture process of each of the above-described components.

### (Mixture process)

For example, the mixture process includes mixing each of the components (A) to (D) and the above-described additive if necessary as uniformly as possible using a mixer or a kneader that is generally used, while keeping at a fixed temperature that does not start the curing. Examples of the mixer or the kneader include roll, extruder, kneader, BANBURY (trademark) mixer, Henschel mixer (trademark), planetary mixer, and so on.

### (Cured article and the production method)

The cured article of the present embodiment is obtained by heating the above-described heat-curable resin composition.

### (Curing)

For the condition of the curing, the most suitable temperature can be selected and searched for depending on the kind of the heat-curable resin composition. For example, it can be determined appropriately in a range of 5 seconds to 120 seconds and at a temperature range of 200 °C to 300 °C to mold in a short time, while suppressing the thermolysis of a binder included in the heat-curable resin composition. It is preferable to vacuum in a cavity to get qualified goods without defects, in producing the cured article. Furthermore, if necessary, complete curing can be carried out by conducting a second curing at a temperature range of 150 °C to 200 °C for 10 minutes to 600 minutes after a first curing.

### (Mechanical property of cured article)

The above-described cured article becomes strong against vibration or shock when it keeps a good balance between the bending strength (at the timing of breaking) and the coefficient of elasticity, and the bending strain (at the timing of breaking).

Specifically, the bending strength is preferably 36 MPa or more, more preferably 37 MPa or more, and further more preferably 38 MPa or more. The bending elastic modulus is preferably 7.5 GPa or more, more preferably 8 GPa or more, and further preferably 8.5 GPa or more. The bending strain is preferably 0.8 % or more, and more preferably 0.85 % or more. When all of the conditions that the bending strength is 36 MPa or more, the bending elastic modulus is 7.5 GPa or more and the bending elastic strain is 0.8% or more are satisfied, it can be evaluated as "having a superior mechanical property".

The bending strength, bending strain, and bending elastic modulus of the above-described cured article are measured in compliance with JIS K7171, except that the specimen width is 10 mm, the span interval is 64 mm, and the bending speed is 2 mm/min. Note that the specimen thickness is 1 mm, but when the specimen thickness of 1 mm cannot be obtained, the span interval can be 64 times the specimen thickness.

### (Conductivity of cured article)

The volume-specific resistivity of the above cured article is preferably 2x10⁻² Ωm or less, more preferably 8x10⁻³ Ωcm or less, further more preferably 5x10⁻³ Ωcm or less. For example, the volume-specific resistivity is measured by a four-point probe method in compliance with JIS K7194.

The contact resistance of the above cured article is preferably 2x10⁻² Ωcm² or less, more preferably 1x10⁻² Ωcm² or less, and further more preferably, to be 7x10⁻³ Ωcm² or less. The contact resistance value is obtained by making a carbon board (1.5 x 10⁻³ Ωcm, 20 mm x 20 mm x 1 mm) in contact with a specimen (20 mm x 20 mm x 2 mm), putting them between two copper sheets, and applying a load of 98 N. Then, a constant current of 1A is flown in the penetration direction, and the resistance value is calculated by measuring the voltage making plus and minus terminals contact with the interface of the specimen and the carbon board, and a cross section in contact is multiplied by the resistance value to obtain the contact resistance value.

The resistivity in the penetration direction (which means the volume-specific resistivity in the penetration direction) is preferably 2 x 10⁻² Ωm or less, more preferably 15 x 10⁻³ Ωcm or less, and further more preferably 10 x 10⁻³ Ωcm or less. The resistance in the penetration direction is measured by making at first four pieces of specimens (50 mm x 50 mm x 2 mm) in contact, putting them between electrodes (100 mm x 50 mm x 0.3 mm) made of gold plated cupper sheets, applying a load of 2 MPa, and measuring the voltage between the gold plated electrodes through which the constant current 1A is flown in the penetration direction, so as to measure the resistance (measurement value: Ra). Next, the resistance value is measured by a similar operation for two pieces of the same specimen (measurement value: Rb). Thus, in the following formula, the resistivity in the penetration direction is calculated.

Resistivity in the penetration direction = (Ra - Rb) x (the area of the specimen) / [(4-2) x (thickness of the specimen)]

The internal resistance of the devices such as the fuel cells using the cured articles of the present embodiment as a component can be lowered, when the volume-specific resistance, contact resistance and penetration resistance of the cured article fall within the above range.

### (Hot water resistance of cured article)

It is a feature that the hot water resistance of the above cured article can be increased. Examples of an index of water resistance include a water absorbing rate and a mass change rate. These can be measured by a method in compliance with JIS K7202.

For example, a specimen of a predefined size is put in a pressure-resistant container, distilled water of a predefined volume is added thereto and examined in an oven of a predefined temperature for a predefined period, so that the mass change of the specimen of before and after the examination can be measured.

### (Molded article)

The molded article of the present embodiment can be obtained by heat curing and molding the heat-curable resin composition, using the molding method such as compression molding, transfer molding, injection molding or injection compression molding. In other words, "molded article" according to the present embodiment, refers to a cured article which is cured in a state arranged in a desired shape. Regarding the mechanical property, conductivity and heat-resistance of the molded article, the preferred ranges of them are as same as those of the cured article.

### (Pulverization (Granulation) process)

In molding the heat-curable resin composition, the heat-curable resin composition may be pulverized or granulated for the purpose of facilitating the supply of the materials to a molding machine or a die. For pulverization, a homogenizer, a Willey grinder, a high-speed rotary grinder (hammer mill, pin mill, cage mill, blender) etc. can be used, and it is preferable to pulverize with cooling the materials to prevent mutual cohesion of the materials. A pelletizing method using an extruder, ruder, ko-kneader, etc., or a bread type granulator and so on may be used for granulation.

### (Sheet making process)

In order to obtain a molded article having preferable accurate dimensions from the heat-curable resin composition, it may be once molded into a sheet having a preset thickness and a preset width (hereinafter, sometimes called green sheet) using an extruder, a roll, a calendar, etc. at the temperature at which curing does not occur. It is preferable to roll with a roll or a calendar after molding by an extruder in order to obtain a sheet with more accurate thickness. It is preferable to extrude in a vacuum state to eliminate voids or air in the green sheet.

### (Molding process)

For a molding process, although not limited in particular, the methods such as compression molding, transfer molding, injection molding or ejection compression molding may be used. For example, when the green sheet is molded by the compression molding, the green sheet is cut or punched to have a target size, one or more seats are set in parallel or in piles in a die with grooves on both sides. Next, a molded article is obtained through heat curing by a compression molding machine. The conditions of the heat curing are same as those of the production of the cured article. It is preferable to apply a pressure of 3 MPa or more with a presser bar with a controlled temperature of 10 °C to 50 °C to correct the curve of the product after molding. When the molded article is subject to the after curing, the curve of the product can be restrained by curing with a pressure of 5 MPa or more.

### (Dimensional accuracy of molded article)

In this embodiment, the dimensional accuracy of the molded article is evaluated as follows. Per one molded article, the thickness of the molded article is measured at 15 points, and the absolute value of the difference (a molding error) with the design value is calculated by percentage with regard to the design value. The points where the thickness is measured are placed equally not to be inclined to a part of the molded article. Finally, an arithmetical average of the results at 15 points is calculated.

In the present embodiment, it is preferable that an average molding error obtained by an above-mentioned method should be equal to or less than 10 % of the design value.

The molded article of the present embodiment is designed for the purpose of manufacturing a separator for a fuel cell, a collector or an electrode for a battery, in particular, and it is useful for the separator for a fuel cell, the collector or the electrode for battery.

### (Separator for a fuel cell)

The separator for a fuel cell consists of the molded article, and has a flow path to carry away gas formed on both sides or on one side. Circulating gas includes air, oxygen, hydrogen, nitrogen, steam and so on. Furthermore, the shape and the size of the flow path in the separator for a fuel cell can be set appropriately depending on the size, the shape, the flow quantity of the gas, the use or the size of the molded article, etc. The cross-sectional shape of the flow path is generally a rectangle and it has a depth of around 0.5 mm and a width of around 1.0 mm, but not limited to these values. Regarding the mechanical property, electrical conductivity, hot water resistance and dimensional accuracy, the preferred ranges are same as those of the molded article.

### (Production method of separator for a fuel cell)

Specific examples of the production method of the separator for a fuel cell include a compression molding method, a transfer molding method, an injection molding method, a casting method, an injection compression molding method, but are not limited to them. In the production method of the separator for a fuel cell, it is preferable that the inside of the die or the whole die should be in vacuum state at the time of molding processing.

The separator for a fuel cell can be obtained by molding the heat curable compositions in accordance with the production method of the molded article. Note that after the curable composition of the present embodiment is cured once, the flow path (grooves) may be formed. Furthermore, curing and the formation of the gas flow path of curable compositions may be performed at the same of time by the compression molding, etc. using a die having the reversed shape of the gas flow path.

Since the mold forming is easily applied for the heat-curable resin composition, it is most suitable for a composite material in the field where the thickness accuracy is required.

Furthermore, the cured article is superior in the mechanical property.

The application of the heat-curable resin composition, the cured article and the molded article are not limited particularly, but the specific examples of the application include a separator for a fuel cell, an electrode, an electromagnetic wave shield, a heat radiation material, a collector for a battery, an electronic circuit board, a resistor, a heater, a dust-collection filter element, a planar heater element, an electromagnetic wave material, etc. Embodiment

The present invention is explained by an embodiment in detail as follows, but the present invention is not limited to the embodiment at all.

### (Reference example)

As an example, a conventional separator for a fuel cell is produced by molding a conventional heat-curable resin composition under conventional conditions of a low temperature and long period in the following procedure , and the dimensional accuracy and the mechanical property were examined.

### (Preparation of heat-curable resin composition)

### (Preparation of graphite)

The graphite was produced by the following methods. LPC-S coke of non-needle coke made by Nippon Steel Chemical Co.,Ltd. was roughly pulverized by a pulverizer (of Hosokawa Micron Corp.) to the size of 2 mm to 3 mm. This roughly pulverized product was finely pulverized by a jet mill (IDS2UR, made by Japan Newmachick Co.,Ltd.). The pulverized powders were then adjusted to have desired particle sizes by classification. The removal of particles with less than or equal to 5 µm was performed by air classification using Tabo Classifier (TC15N, made by Nisshin Engineering Co.,Ltd.). 0. 6kg of Boron carbide (B4C) was added to a part, i.e., 14.4 kg of this finely crushed product that was adjusted, and was mixed in a Henschel mixer at 800 rpm for 5 minutes. This was sealed in the graphite crucible with a cover, having an inside diameter of 40 cm and a capacity of 40 liters, placed in a graphite furnace using a graphite heater, and graphitized at a temperature of 2,900 °C under argon gas atmosphere. After this was cooled down, the powders were taken off to provide 14 kg of powders. The provided graphite fine particles have an average particle size of 20.5 µm and include 1.3 mass% content of B.

### (Preparation of binder)

As a binder of the component (A), 1, 2-polybutadiene (brand name JSRRB (trademark) 810, which is a side chain type C=C bond containing high molecular compound, made by JSR Corporation) and elastomeric ethylene butene copolymer (brand name ENR7380 made by Dow Chemical Company), which is an elastomer, at the same mass ratio, were molded by extrusion molding by an extruder, and an integrated product was obtained as a pellet.

Furthermore, separately from the pellet, liquid 1,2-polybutadiene (brand name NISSO-PB B3000 made by Nippon Soda Co., Ltd. ) which is a side chain type C=C bond containing polymer was prepared.

### (Curing initiator)

As a curing initiator, 2,5-dimethyl-2,5-bis(t-butyl peroxy) hexane (brand name Kayahexa AD made by Kayaku Akzo Corporation) was used.

### (Mixture)

Boron containing graphite fine powders obtained by the above-described "production process of the graphite", the pellet obtained by the above-described "preparation of the binder", liquid 1, 2-polybutadiene and the curing initiator were weighed for quantity shown in Table 1, respectively.

Among each weighed materials, the pellet was casted into a labopulasto mill (Model 50C150 made by Toyo Seiki Co., Ltd.) set to 100 °C, melted at 40 rpm, the remaining materials (liquid 1,2-polybutadiene and a curing initiator) were casted into a labopulasto mill to be kneaded for 5 minutes, and a heat-curable resin composition was obtained.

### (Production of a separator for a fuel cell)

### (Pulverization step)

The heat-curable resin composition provided by the process of the above-described "production of the heat-curable resin composition" was pulverized using Wonder blender (Model WB-1 made by Osaka Chemical Co., Ltd.) to powders to pass a sieve of 2 mm (Pulverization step).

### (Production of green sheet)

The heat-curable resin composition pulverized by the "pulverization step" was heated at 90 °C for 20 minutes, and rolled in a heated state into a sheet having a width of 100 mm and a thickness of 1 mm with a 10-inch roll (made by Daihan Co., Ltd.) to obtain a green sheet.

### (Production of a separator for a fuel cell)

A green sheet provided by the above-described "production of green sheet" was cut to have a size of 280 mm x 200 mm, and at a size of 280 mm x 200 mm x 1.5 mm, the sheet was cured under pressure application of 60 MPa for 480 seconds at 180 °C of mold temperature, using a die which is enable to form a separator for a fuel cell and which has grooves (not shown) having a width of 1 mm and a depth of 0.5 mm formed every 1 mm on one side, and using a 500 t oil hydraulic press.

### (Measurement of molding error)

Thickness was measured at parts between the grooves of each measurement position (No. 1) to (No. 15) shown in FIG. 1 for the separator for a fuel cell provided by the above-described "Production of separator for a fuel cell". Then, the absolute value of the difference (molding error) between a design value and the actual measured value of the thickness at the each of 15 places is calculated in percentage with regard to the design value. When the result of an arithmetical average is 10 % or less, it is valued as "having superior dimensional accuracy". Results are shown in Table 1. Referring to Table 1, the separator for a fuel cell of the reference example has superior dimensional accuracy.

### (Measurement of bending strength, bending strain and elastic modulus)

A separator provided by the above-described "Production of separator for a fuel cell" is cut to make specimens each having a size of 80 mm x 10 mm x 1 mm. Bending test was performed by the above-described method using an electrically operated desktop examination machine (Model LSC-1/30 made by JT Toshi Corporation) to measure the bending strength, bending strain and elastic modulus for the provided specimens. Results of the measurements are shown in Table 1. If the measurement value of the bending strength is 36 MPa or more, the measurement value of the bending strain is 0.8 % or more, and elastic modulus is 7.5 GPa or more, which are obtained from the results of the measurements, such a specimen is evaluated as "having a superior mechanical property". The separator of the reference example has a superior mechanical property.

### (Examples 1-4)

### (Preparation of the heat-curable resin composition)

In the above-described "mixture" process, in addition to the above-described boron containing graphite fines, pellet, liquid 1,2-polybutadiene, and curing initiator, tetrakiss (2-ethylhexyl) thiuram disulfide (brand name NOCCELER TOUT-N made by Ouchi Shinko Chemical Industrial) as a curing retarder was weighed for quantity shown in Table 1 to obtain a heat-curable resin composition in the same way as that of the reference examples except that it was casted into the Labo Plasto mill with liquid 1,2- polybutadiene and a curing initiator as "remaining materials".

### (Production of a separator for a fuel cell)

Separators for fuel cells were produced in the same way as that of the reference example except that the curing was performed at 210°C of mold temperature for 70 seconds.

### (Measurement of molding error)

A molding error was measured in the same way as that of the reference example. Results are shown in Table 1. Although the separators for fuel cells of embodiments 1 to 4 were cured at a higher temperature and for a shorter time than those of the separator for a fuel cells of the reference examples, they have superior dimensional accuracy as same as those of the separators for fuel cells of the reference examples.

### (Measurement of bending strength, bending strain and bending elastic modulus)

The bending strength, bending strain and bending elastic modulus were measured for separators for fuel cells provided by the above in the same way as those of the reference examples. Results are shown in Table 1. Referring Table 1, the separators for fuel cells of examples 1 to 4 have superior mechanical properties as same as those of the separators for fuel cells of the reference examples. Examples 2 to 4 including 1 to 2 parts by mass of the curing retarder with regard to 100 parts by mass of a binder have 8 MPa or more of bending elastic modulus as same as that of the reference example, and are particularly superior with respect to the bending elastic modulus.

### (Comparative example 1)

A separator for a fuel cell was produced in the same way as those of examples 1 to 4 except that the heat-curable resin composition prepared in the reference example which does not include a curing retarder was used as a heat-curable resin composition, and the molding error, bending strength, bending strain, and elastic modulus were measured. Results are shown in Table 1. The molding error of the separator for a fuel cell of comparative example 1 is much larger than those of the separator for fuel cells of embodiments 1 to 4, and it is inferior with respect to the dimensional accuracy.

### (Comparative example 2)

A separator for a fuel cell was produced in the same way except that the weight of the curing retarder is 3 parts by mass in the process of the "production of the heat-curable resin composition" of examples 1 to 4. The "bending strength", "bending strain" and "bending elastic modulus" of the provided separator for a fuel cell were measured. The measurement results are shown in table 1. As shown in table 1, the evaluation is obtained such that the cured article of comparative example 2 is inferior in the "bending strength".

(Table 1)

**TABLE.1**

| | | | EXAMPLE1 | EXAMPLE2 | EXAMPLE3 | EXAMPLE4 | REEFERENCE EXAMPLE | COMPARATIVE EXAMPLE1 | COMPARATIVE EXAMPLE2 |
|---|---|---|---|---|---|---|---|---|---|
| (A) COMPONENT | SIDE CHAIN TYPE C= C BOND CONTAINING RESIN | RB810(MASS PART) | 25 | 25 | 25 | 25 | 25 | 25 | 25 |
| | | B-3000(MASS PART) | 50 | 50 | 50 | 50 | 50 | 50 | 50 |
| | ELASTMER | ENR7380(MASS PART) | 25 | 25 | 25 | 25 | 25 | 25 | 25 |
| | TOTAL(MASS PART) | | 100 | 100 | 100 | 100 | 100 | 100 | 100 |
| (B) COMPONENT | CARBON MATERIALS | B CONTAINING GRAPHITE (MASS PART) | 600 | 600 | 600 | 600 | 600 | 600 | 600 |
| (C) COMPONENT | CURING INITIATOR | KAYAHEXA AD (MASS PART) | 5 | 5 | 5 | 5 | 5 | 5 | 5 |
| (D) COMPONENT | RETARDER | NOCCELER-TOT-N (MASS PART) | 0. 5 | 1 | 1.5 | 2 | 0 | 0 | 3 |
| MOLDING TEMP(°C) | | | 210 | 210 | 210 | 210 | 180 | 210 | 210 |
| MOLDING TIME (S) | | | 70 | 70 | 70 | 70 | 480 | 70 | 70 |
| BENDING STRENGTH (MPa) | | | 36.6 | 36. 5 | 38.4 | 37. 8 | 37.9 | 37.8 | 35. 5 |
| BENDING STRAIN (%) | | | 0.88 | 0.88 | 0.88 | 0.94 | 0.81 | 0.81 | 0.95 |
| BENDING ELASTIC MODULUS(GPa) | | | 7.5 | 8.1 | 8.4 | 8.2 | 8 | 7.5 | 7.9 |
| THICKNESS ERROR OF MOLDING(%) | | | 9.8 | 9.9 | 9.7 | 8.6 | 8.1 | 36.7 | 8.5 |

As shown in Table 1, it has been found that the heat-curable resin compositions of examples 1 to 4 are superior in dimensional accuracy, even when they are cured at a high temperature for a short time. Furthermore, it has been found that the separator for a fuel cells of embodiments 1 to 4 are superior in mechanical property. In particular, it has been found that when the content of the curing retarder included in the heat-curable resin composition is over 3 parts by mass with regard to 100 parts by mass of the binder, the bending strength is extremely lowered.

The embodiments of the present invention have been explained heretofore, but the present invention is not limited to the above-described embodiments, various kinds of modification and improvements may be applicable.

## Claims

1. A heat-curable resin composition comprising:
(A) a binder in an amount of 100 parts by mass comprising 50 mass% or more of a polymer comprising 60 mol% or more monomer units having a carbon-carbon double bond in a side chain;
(B) a carbon material in an amount of 150 to 1,000 parts by mass;
(C) a curing initiator in an amount of 1 to 10 parts by mass; and
(D) a curing retarder in an amount of 0.1 to 2 parts by mass.

2. The heat-curable resin composition according to claim 1, wherein (D) the curing retarder is tetrakiss (2-ethylhexyl) thiuram disulfide.

3. The heat-curable resin composition according to claim 1 or claim 2, wherein the polymer in (A) the binder is a hydrocarbon.

4. The heat-curable resin composition according to any one of claim 1 to claim 3, further comprising 5 to 40 mass% of thermoplastic elastomer in (A) the binder.

5. A cured article provided by curing the heat-curable resin composition according to any one of claim 1 to claim 4.

6. A production method of a cured article comprising curing the heat-curable resin composition according to any one of claim 1 to claim 4 at 200°C to 300 °C for 90 seconds or less.

7. A molded article provided by forming the heat-curable resin composition according to any one of claim 1 to claim 4 into a desired shape and curing the formed heat-curable resin composition.

8. A production method of a molded article comprising forming the heat-curable resin composition according to any one of claim 1 to claim 4 into a desired shape and curing the formed heat-curable resin composition at 200 °C to 300 °C for 90 seconds or less.

9. A separator for a fuel cell the molded article according to claim 7.
